# EUROPEAN PATENT APPLICATION

(11) **EP 1 167 103 A1**
(43) Date of publication of application: **02.01.2002**
(21) Application number: 01115816.9
(22) Date of filing: 28.06.2001
(51) Int. Cl.: B60J 10/06, B60J 10/00

(54) **Glass run and method for manufacturing the same**

(30) Priority: 30.06.2000 JP 2000199092
(71) Applicant: Toyoda Gosei Co., Ltd., Nishikasugai-gun, Aichi-ken 452-8564 (JP)
(72) Inventor: Kozawa, Hiroyasu, Toyoda Gosei Co.,Ltd., Aichi 452-8564 (JP); Kubo, Yoshihisa, Toyoda Gosei Co.,Ltd., Aichi 452-8564 (JP)
(74) Representative: Blumbach, Kramer & Partner GbR

(57) **Abstract**

A glass run (1) has extrusion portions (2,3) and a molded portion (4). The extrusion portions (2,3) and the molded portion (4) are provided with a body portion (6) and seal lips (7,8). The body portion (6) to be fitted to a sash is constituted by a bottom wall (9) and a pair of side walls (11,12) so as to have a substantially U-shape in section. The extrusion portions (2,3) are molded so that the pair of side walls and corresponding to the portions are expanded, while the molded portion (4) is molded so that the body portion corresponding to the portion has a substantially unexpanded U-shape in section. In addition, the shape of the body portion (6) corresponding to the molded portion (4) does not substantially change when the glass run is attached. That is, when the glass run (1) is attached to the sash, it is not necessary to narrow the side walls (11,12) corresponding to the molded portion (4). Therefore, the molded portion (4) has no change in angle, curvature radius, circumferential length, and so on, before and after the attachment.

## Description

### BACKGROUND OF THE INVENTION

### 1. Field of the Invention

The present invention relates to a glass run to be attached to a sash provided in a vehicle body or a vehicle door, and a method for manufacturing such a glass run.

The present application is based on Japanese Patent Application No. 2000-199092, which is incorporated herein by reference.

### 2. Description of the Related Art

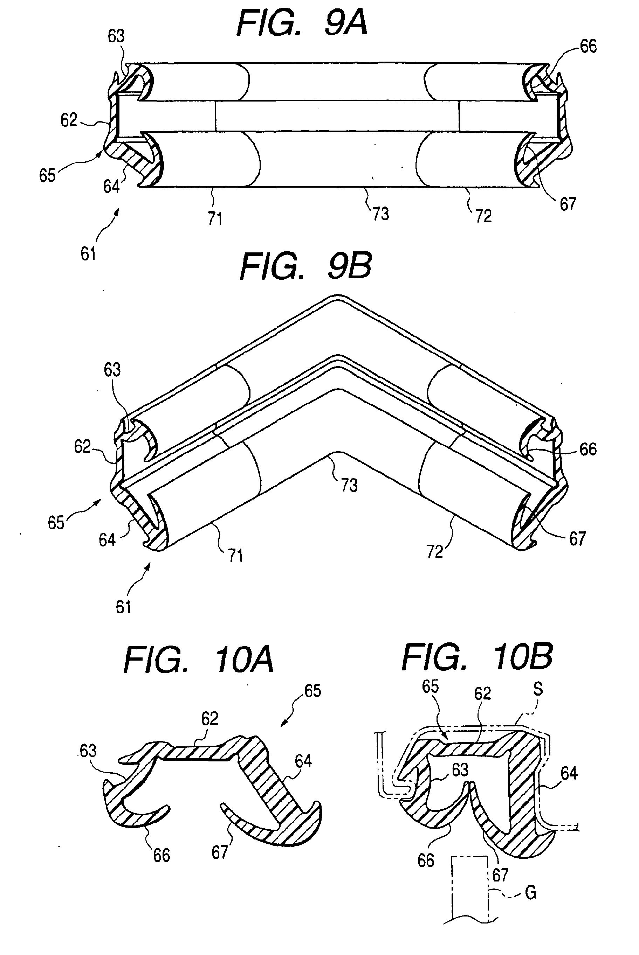

As shown in Figs. 9A, 9B, 10A and 10B, a glass run 61 has a body portion 65 and a pair of seal lips 66 and 67. The body portion 65 is constituted by a bottom wall 62 and a pair of side walls 63 and 64 extending from the bottom wall 62. The seal lips 66 and 67 extend from substantially forward ends of the side walls 63 and 64 to the inside of the body portion 65 respectively. Then, the body portion 65 is attached to a sash S provided in a vehicle body or a vehicle door (see Fig. 10B), the vehicle interior side and the vehicle exterior side with respect to a glass G are sealed by the pair of seal lips 66 and 67.

Generally, the glass run 61 is sectioned into extrusion portions 71 and 72 extending longitudinally and one molded portion 73. That is, the extrusion portions 71 and 72 are formed into substantially straight lines (long shapes) by a not-shown extruder. On the other hand, the molded portion 73 is formed by a predetermined metal mold so as to connect the two extrusion portions 71 and 72 with each other at a predetermined angle (for example, 90 degrees). That is, the molded portion 73 corresponds to a corner portion.

Conventionally, the extrusion portions 71 and 72 and the molded portion 73 are formed so that the pair of side walls 63 and 64 are expanded with respect to the bottom wall 62. This is grounded on the following reasons . First, as to the extrusion portions 71 and 72, (1) it is preferably that forming is performed as the side walls 63 and 64 are expanded, in consideration of applying a predetermined lubricant onto the inner circumferential surface of the bottom wall 62 and the glass sliding surfaces of the seal lips 66 and 67. In addition, (2) if the seal lips 66 and 67 are close to each other, there is a fear that the seal lips 66 and 67 are connected to each other immediately after extruding. Thus, such a fear is prevented by forming while expanding the side walls 63 and 64. On the other hand, as to the molded portion 73, (1) it is preferable that the shape of the molded portion 73 is made to follow the extrusion portions 71 and 72. In addition, (2) it is necessary to set the core for defining the inner circumferential surfaces of the body portion 65 and the seal lips 66 and 67 at the time of injection molding. However, when the mold has a cavity in which the seal lips 66 and 67 are close to each other, it is impossible to provide a sufficient thickness for the retention plate for retaining the core.

When the glass run 61 is to be attached to the sash S, the glass run 61 formed with the side walls 63 and 64 in an expanded state as mentioned above (see Figs. 10A) is deformed so that the side walls 63 and 64 are narrowed from the expanded state to an unexpanded state as shown in Fig. 10B. That is, when the glass run 61 is attached, the body portion 65 is shaped to have a substantially U-shape in section. At this time, if the glass G is absent, the tip end portions of the seal lips 66 and 67 are in contact with each other.

However, in the above-mentioned technique, the following problem arises. That is, when the extrusion portions 71 and 72 are narrowed, there is no problem to attach the glass run 61 to the sash S. However, when the molded portion 73 is narrowed, the angle of bending (curvature radius, circumferential length, or the like) may change in accordance with the stress produced then. In such a case, the whole shape of the glass run 61 does not follow the shape of the sash S, so that there is a fear that an attachment failure occurs.

On the other hand, it can be considered that the glass run 61 in the expanded state is designed in anticipation of such a change in angle or the like. In this case, however, it is impossible to anticipate the kind of change to be caused in angle and the extent of the change. It is therefore necessary to repeat trial and error over and over again. As a result, the number of man-hour for design increases conspicuously.

### SUMMARY OF THE INVENTION

The present invention was developed to solve the foregoing problem. It is an object of the present invention to provide a glass run and a manufacturing method thereof, in which a failure is not brought about when the glass run is attached, and the number of man-hour for design can be reduced conspicuously.

The present invention suitable for attaining the above object or the like will be described below.

According to a first aspect of the present invention, a glass run comprising: an extrusion portion formed by an extrusion-molding method; a molded portion formed by an injection molding method so as to be connected to an end portion of the extrusion portion; a body portion having a substantially U-shape in section and constituted by a bottom wall to be attached to a sash provided in a vehicle body or a vehicle door, and a pair of side walls extending from the bottom wall; and a pair of seal lips extending toward an inside of the body portion from the pair of side walls respectively for sealing a vehicle interior side and a vehicle exterior side with respect to a glass; wherein, at least when the body portion is not attached to the sash, the body portion corresponding to the molded portion has a substantially unexpanded U-shape in section the same as that when the body portion of the molded portion is attached to the sash.

According to the above first aspect, in the glass run having the extrusion portion and the molded portion, the body portion is attached to the sash provided in the vehicle body or the vehicle door. In addition, the vehicle interior side and the vehicle exterior side with respect to the glass are sealed by the bottom wall and the pair of seal lips extending toward the inside of the body portion from the pair of side walls constituting the body portion. In the glass run configured thus, at least when the body portion is not attached to the sash, the body portion corresponding to the molded portion formed by the injection molding method so as to be connected to an end portion of the extrusion portion has a substantially unexpanded U-shape in section the same as that when the body portion is attached to the sash. Accordingly, it is not necessary to narrow the side walls corresponding to the molded portion when the glass run is attached. As a result, there is no fear that the molded portion changes in angle, curvature radius, circumferential length, and so on, before and after the glass run is attached. It is therefore unnecessary to repeat trial and error for anticipation of such a change. Thus, it is possible to reduce the number of man-hour for design conspicuously.

According to a second aspect of the present invention, there is provided a glass run comprising: an extrusion portion formed by an extrusion-molding method; a molded portion formed by a die-molding method so as to be connected to an end portion of the extrusion portion; a body portion having a substantially U-shape in section and constituted by a bottom wall to be attached to a sash provided in a vehicle body or a vehicle door, and a pair of side walls extending from the bottom wall; and a pair of seal lips extending toward an inside of the body portion from the pair of side walls respectively for sealing a vehicle interior side and a vehicle exterior side with respect to a glass; wherein a sectional shape of the body portion corresponding to the molded portion is not substantially changed before and after the glass run is attached to the sash.

According to the above, in the glass run having the extrusion portion and the molded portion, the body portion is attached to the sash provided in the vehicle body or the vehicle door. In addition, the vehicle interior side and the vehicle exterior side with respect to the glass are sealed by the bottom wall and the pair of seal lips extending toward the inside of the body portion from the pair of side walls constituting the body portion. In the glass run configured thus, the sectional shape of the body portion corresponding to the molded portion formed by the injection molding method so as to be connected to an end portion of the extrusion portion is not substantially changed before and after the glass run is attached to the sash. Accordingly, there is no fear that the molded portion changes in angle, curvature radius, circumferential length, and so on before and after the glass run is attached. It is therefore unnecessary to repeat trial and error for anticipation of such a change. Thus, it is possible to reduce the number of man-hour for design conspicuously.

In the above aspects, the body portion corresponding to the extrusion portion is preferably in an expanded state at leasr when the glass run is not attached to the sash.

Thus, the body portion corresponding to the extrusion portion is in an expanded state at least when the glass run is not attached to the sash. Accordingly, there is a merit that a predetermined lubricant or the like is easily applied to the inner surface of the bottom wall, the glass sliding surfaces of the seal lips, and so on, in advance. In addition, the problem that the seal lips are connected to each other immediately after extrusion-molding is avoided.

In the above aspects, a gap not larger than thickness of the glass is preferably formed between the pair of seal lips corresponding to the molded portion.

A gap is formed between the pair of seal lips corresponding to the molded portion. However, the gap is not larger than the thickness of the glass. It is therefore possible to ensure the seal function by the seal lips sufficiently.

In the above aspects, the molded portion can couple two extrusion portions at a predetermined nonlinear angle or two extrusion portions having different sectional shapes from each other.

For coupling the molded portion with two extrusion portions at a predetermined nonlinear angle or two extrusion portions having different sectional shapes from each other, if particularly the side walls of the molded portion have to be narrowed, there is a tendency that the molded portion is apt to change in angle, curvature radius, circumferential length, and so on. According to this, it is not necessary to narrow the side walls. It is therefore possible to wipe out such a fear radically.

According to a third aspect of the present invention, there is provided a method for manufacturing a glass run having a body portion constituted by a bottom wall to be attached to a sash provided in a vehicle body or a vehicle door, and a pair of side walls extending from the bottom wall, and a pair of seal lips extending toward an inside of the body portion from the pair of side walls respectively for sealing a vehicle interior side and a vehicle exterior side with respect to a glass; comprising: an extrusion-molding step for forming an extrusion portion by an extrusion-molding method so that the extrusion portion having the pair of side walls expanded with respect to the bottom wall has a substantially longitudinally equal sectional shape; and an injection molding step for molding a molded portion by injecting a die-molding material such as rubber, thermoplastic elastomer, or the like, into a cavity while setting an end portion of the extrusion portion in a mold, so that the molded portion is connected to the end portion of the extrusion portion; wherein a portion of the cavity corresponding to the body portion has a substantiallyunexpanded U-shape in section.

According to the above third aspect, in the glass run having the extrusion portion and the molded portion, the body portion is attached to the sash provided in the vehicle body or the vehicle door. In addition, the vehicle interior side and the vehicle exterior side with respect to the glass are sealed by the bottom wall and the pair of seal lips extending toward the inside of the body portion from the pair of side walls constituting the body portion. When the glass run configured thus is manufactured, first, in the extrusion-molding step, the extrusion portion is formed by an extrusion-molding method so that the extrusion portion having the pair of side walls expanded with respect to the bottom wall has a substantially equal sectional shape in the longitudinal direction. Accordingly, there is a merit that a predetermined lubricant or the like is easily applied to the inner surface of the bottom wall, the glass sliding surfaces of the seal lips, and so on. In addition, the problem that the seal lips are connected to each other immediately after extrusion-molding is avoided. Next, in the injection molding step, an injection molding material such as rubber, thermoplastic elastomer, or the like, is charged into a cavity in the state where an end portion of the extrusion portion is set in a mold. Thus, the molded portion is molded to be connected to the end portion of the extrusion portion. At this time, the portion of the cavity corresponding to the body portion has a substantially U-shape in section in an unexpanded state. Therefore, the body portion of the obtained molded portion has a substantially U-shape in section in an unexpanded state. Accordingly, it is not necessary to narrow the side walls corresponding to the molded portion when the glass run is attached. Thus, the molded portion has no change in angle, curvature radius, circumferential length, and so on before and after the attachment. It is therefore unnecessary to repeat trial and error for anticipation of such a change. Thus, it is possible to reduce the number of man-hour for design conspicuously.

In the method of the third aspect of the present, wherein the mold has a core for defining inner circumferential surfaces of the body portion and the seal lips, and the extrusion portion is set in the mold by fitting the end portion of the extrusion portion into an end portion of the core, while retention means for retaining the core is extended from a portion of the mold corresponding to the extrusion portion.

The inner circumferential surfaces of the body portion and the seal lips are defined by the core provided in the mold. In the injection molding step, the extrusion portion is set in the mold by fitting the end portion of the extrusion portion into an end portion of the core. When the injection molding is carried out, the core has to be retained. Retention means for the core is extended from a portion corresponding to the extrusionportion. Accordingly, theinfluenceoftheretention means on the shape of the molded portion is not necessarily taken into consideration. As a result, there occurs a merit that the seal lips can be formed without impairing their seal function.

In the third aspect, when the injection molding step is carried out, two extrusion portions are preferably set while the retention means is extended from respective portions corresponding to the two extrusion portions.

The core is retained by the retention means extending from at least two places on the opposite sides of the core. It is therefore possible to stabilize the retention state of the core.

In the third aspect, the distance between the portions of the cavity for forming the seal lips is preferably not larger than the thickness of the glass.

The distance between the seal lips of the molded portion of the obtained glass run is not larger than the thickness of the glass. It is therefore possible to ensure the seal function by the seal lips sufficiently.

Features and advantages of the invention will be evident from the following detailed description of the preferred embodiments described in conjunction with the attached drawings.

### BRIEF DESCRIPTION OF THE DRAWINGS

In the accompanying drawings:
Fig. 1 is a sectional view showing a molded portion before the attachment of a glass run in an embodiment;
Fig. 2 is a side view showing the whole configuration of the glass run;
Figs. 3A and 3B are enlarged perspective views showing a portion α in Fig. 2;
Fig. 4 is a plan view schematically showing a mold assembly for molding the molded portion;
Fig. 5 is a sectional view taken on line V-V in Fig. 4, showing the state where extrusion portions have been set in set portion;
Fig. 6 is a sectional view taken on line VI-VI in Fig. 4;
Fig. 7 is a sectional view of the mold assembly showing the state where the molded portion has been molded;
Fig. 8 is a sectional view of a mold assembly in another embodiment;
Figs. 9A and 9B are perspective views showing a corner portion of a glass run before attachment in the background art; and
Fig. 10A is a sectional view showing the glass run before attachment in the background art, and Fig. 10B is a sectional view of the glass run which has been attached.

### DETAILED DESCRIPTION OF THE PREFERRED EMBODIMENTS

An embodiment of the present invention will be described below with reference to the drawings.

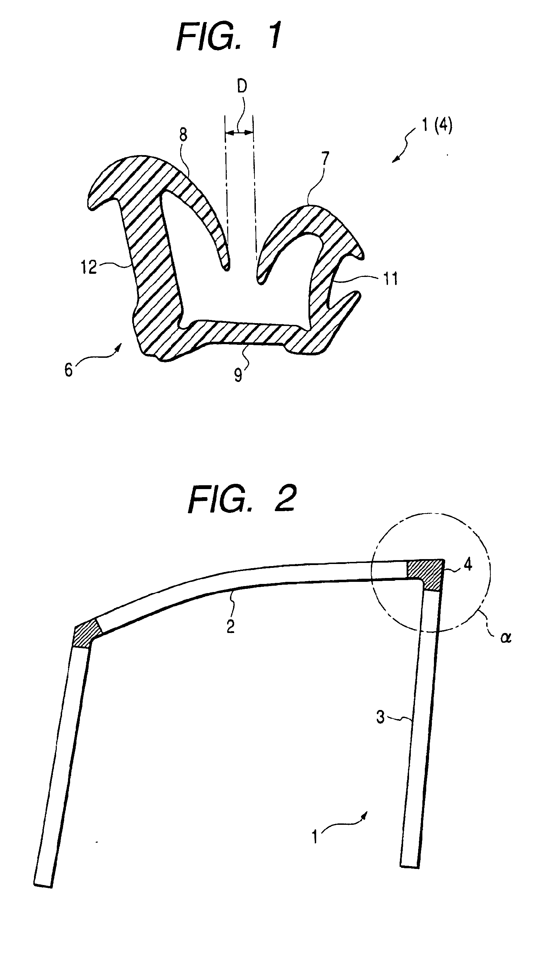

As shown in Fig. 2, in a vehicle having a door, a glass run 1 made of EPDM (ethylene-propylene-diene copolymer rubber) is attached to the door so as to follow the outer circumferential shape of the door. In more detailed description, the door is provided with a sash S following the outer circumferential shape of the door as illustrated in Fig. 10B, so that the glass run 1 in this embodiment can be attached to the sash S.

The glass run 1 is sectioned into extrusion portions 2 and 3, and a molded portion 4 (a dotted portion in Fig. 2) in the longitudinal direction of the glass run 1. That is, the extrusion portions 2 and 3 are formed into substantially straight lines (long shapes) by a not-shown extruder. On the other hand, the molded portion 4 is formed by a mold assembly 5 which will be described later, so that the extrusion portions 2 and 3 are connected to each other at a predetermined angle (for example, 90 degrees). That is, the molded portion 4 corresponds to a corner portion.

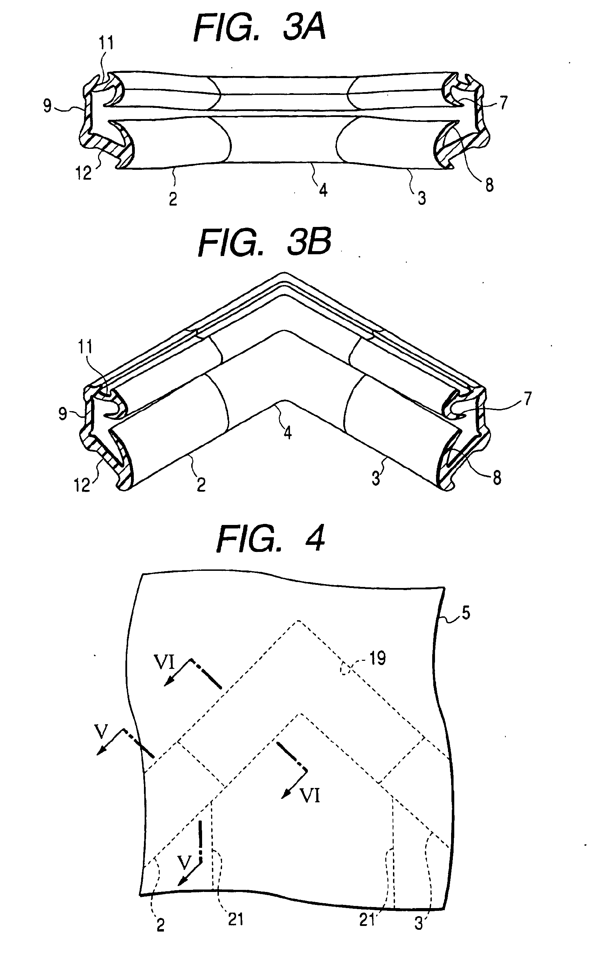

Figs. 3A and 3B are perspective views in which the corner portion (portion α in Fig. 2) of the glass run 1 which has not yet been attached to the sash S is viewed from different angles. As shown in Figs. 3A and 3B, each of the extrusion portions 2 and 3 and the molded portion 4 has a body portion 6 and a pair of seal lips 7 and 8. The body portion 6 is constituted by a bottom wall 9 and a pair of side walls 11 and 12. The body portion 6 is to be fitted to the sash S, and the pair of side walls 11 and 12 extends from the bottom wall 9. On the other hand, the seal lips 7 and 8 extend from substantially forward portions of the side walls 11 and 12 to the inside of the body portion 6 respectively. Thus, the vehicle interior side and the vehicle exterior side with respect to a glass G (see Fig. 10B) are sealed by the seal lips 7 and 8.

In this embodiment, the extrusion portions 2 and 3 are formed in the state that the pair of side walls 11 and 12 are expanded in the same manner as those in the above-mentioned background art. As a result, it becomes easy to apply a predetermined lubricant such as polyurethane or the like to the inner circumferential surface of the bottom wall 9 and the glass G sliding surfaces of the seal lips 7 and 8. In addition, the seal lips 7 and 8 are not close to each other. Thus, such a problem that the seal lips 7 and 8 are connected to each other immediately after extruding is avoided.

On the other hand, in the moldedportion 4, the body portion 6 thereof has a substantially unexpanded U-shape in section as shown in Fig. 1. In addition, this shape has little change even when the glass run 1 is attached to the sash S. Further, a slight gap D is formed between the pair of seal lips 7 and 8 corresponding to the molded portion 4. Then, the gap D is set to be not larger than the thickness of the glass G.

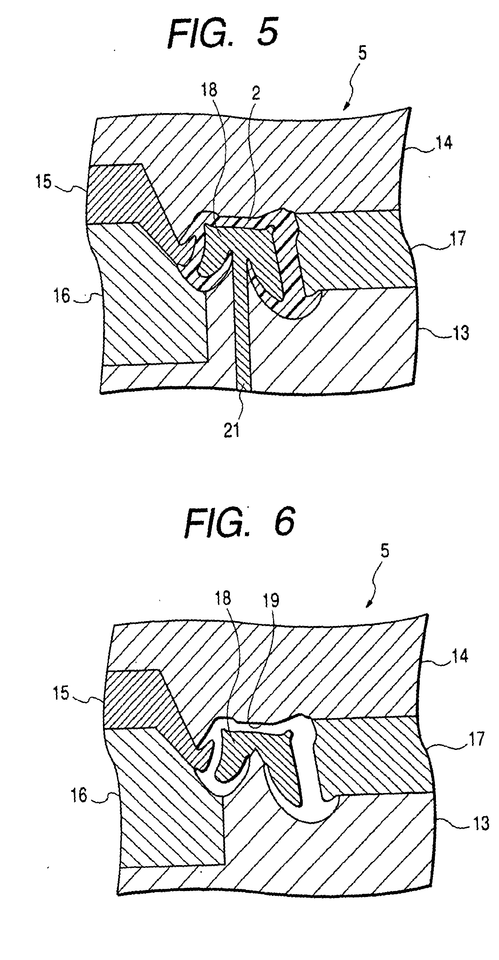

Next, description will be made about the structure of the mold assembly 5 for molding particularly the molded portion 4 of the glass run 1. As shown in Figs. 4, 5 and 6, the mold assembly 5 has a lower mold 13, an upper mold 14, a first slide core 15 which is rotatable, a second slide core 16, a third slide core 17, and a center core 18. The lower mold 13 defines chiefly the glass G sliding surfaces of the seal lips 7 and 8. The upper mold 14 defines chiefly the attachment-side surface of the bottom wall 9. The first slide core 15 defines chiefly the outside surface of the side wall 11. The second slide core 16 defines chiefly the base end surface of the seal lip 7. The third slide core 17 defines chiefly the outside surface of the side wall 12. The center core 18 defines the inner circumferential surfaces of the body portion 6 and the seal lips 7 and 8. Then, a cavity 19 for molding the molded portion 4 of the glass run 1 is formed by the lower mold 13, the upper mold 14, the first slide core 15, the second slide core 16, the third slide core 17, and the center core 18 (see Fig. 6). In addition, set portions for setting the end portions of the extrusion portions 2 and 3 are provided in the mold assembly 5. As shown in Fig. 5, the lower mold 13, the upper mold 14, the first slide core 15, the second slide core 16, the third slide core 17, and the center core 18 are present also in the set portions. However, the center core 18 has to be retained in a predetermined position in the cavity 19. Therefore, a retentionplate 21 constituting a retention member for retaining the center core 18 from the outside is extended from the center core 18. In this embodiment, the retention plate 21 is disposed not in the cavity 19 for molding the molded portion 4 but in the set portions on the opposite sides of the cavity 19. When the end portions of the extrusion portions 2 and 3 are set in the set portions, the end portions are plugged into the center core 18. Incidentally, at this time, the end portions of the extrusion portion 2 and 3 are plugged in while the side walls 11 and 12 thereof are narrowed. At the same time, the pair of seal lips 7 and 8 are bent slightly conveniently for the retention plate 21 to be located between the seal lips 7 and 8 of the extrusion portions 2 and 3.

Next, description will be made about the method for manufacturing the glass run configured thus. However, a portion corresponding to the portion α in Fig. 2 will be described chiefly for convenience of explanation (the other portions are manufactured similarly). First, the extrusion portions 2 and 3 are formed by a known extrusion-molding method by use of a not-shown extruder. At this time, the extrusion portions 2 and 3 are formed so that the pair of side walls 11 and 12 are expanded, as described above.

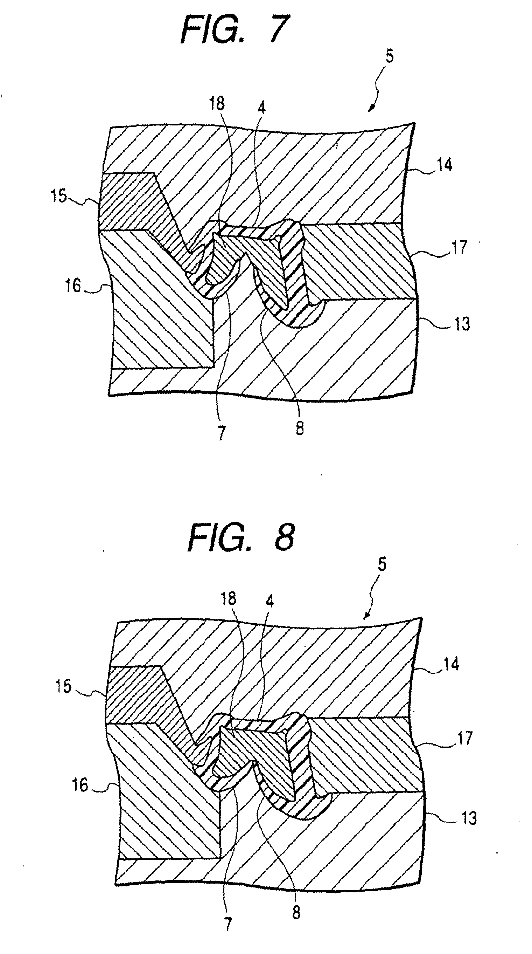

Next, the extrusion portions 2 and 3 are installed in the set portions of the mold assembly 5 (see Figs. 4 and 5), and mold clamping is carried out. Then, unvulcanized EPDM is injected into the cavity 19 from a not-shown gate, and subjected to vulcanization. Then, EPDM is solidified to form the molded portion 4 as shown in Fig. 7. After that, the respective molds 13 to 18 are released. Thus, the glass run 1 in which the extrusion portions 2 and 3 are connected through the molded portion 4 is obtained.

In such a manner, according to the glass run 1 in this embodiment, the body portion 6 corresponding to the molded portion 4 has a substantially unexpandedd U-shape in section when the glass run 1 has not yet been attached to the sash S. As a result, it is not necessary to narrow the side walls 11 and 12 corresponding to the molded portion 4 when the glass run 1 is attached to the sash S. Therefore, the molded portion 4 has no change in angle, curvature radius, circumferential length, and so on, before and after the attachment. It is therefore possible to avoid such a problem that the glass run 1 cannot be attached to follow the shape of the sash S. In addition, it is not necessary to repeat trial and error for anticipation of such a change when the glass run 1 is designed. It is therefore possible to reduce the number of man-hour for design conspicuously.

In addition, though the gap D is formed between the pair of seal lips 7 and 8 corresponding to the obtained molded portion 4, the gap D is not larger than the thickness of the glass. It is therefore possible to ensure the seal function of the seal lips 7 and 8 sufficiently.

Further, in the mold assembly 5, the retention plate 21 for retaining the center core 18 is extended from the portions corresponding to the set portions. Accordingly, the influence of the presence of the retention plate 21 on the shape of the molded portion 4 is not necessarily taken into consideration. It is therefore possible to make the gap D as short as possible. As a result, there occurs a merit that the seal lips 7 and 8 can be formed without impairing their seal function.

Incidentally, the present invention is not limited to the contents described in the above embodiment. For example, the following methods may be carried out. Not to say, it is possible to do other applications or modifications that are not shown in the following methods.
(a) In the above embodiment, the predetermined gap D is formed between the pair of seal lips 7 and 8. Alternatively, for example, as shown in Fig. 8, the molded portion 4 may be molded by use of a mold assembly 5 which forms no gap between the seal lips 7 and 8. At this time, the seal lips 7 and 8 are allowed to be connected to each other when the molded portion 4 is molded. In such a case, subsequently the seal lips 7 and 8 can be separated from each other easily manually or by use of a cutter or the like.
(b) In the above embodiment, the present invention is implemented in the case where the glass run 1 is constituted substantially by three extrusion portions 2 and 3 and two molded portions 4. However, the present invention is not limited to these numbers. For example, a glass run may be constituted by two extrusion portions and one molded portion which connects the extrusion portions, or a glass run may be constituted by one extrusion portion and one molded portion which is connected to at least one end of the extrusion portion.
(c) In the above embodiment, the glass run 1 is formed of EPDM. Alternatively, the glass run 1 may be formed of any other raw material such as thermoplastic elastomer (TPE), thermoplastic polyolefin (TPO), soft polyvinyl chloride, or the like.
(d) In the above embodiment, the present invention is implemented in the case where the glass run 1 is attached to the sash S attached to a side door. Alternatively, the sash S may be provided on the vehicle body side.
(e) The present invention may be applied also to a glass run having another seal lips different from those in the above embodiment.
(f) In the above embodiment, the retention plate 21 is employed as retention means. Alternatively, the retention plate 21 may be replaced by rod-like retention means.
(g) The sectional shape of the body portion 6 corresponding to the molded portion 4 is not always perfectly identical before and after the attachment to the sash S. A very small quantity of alteration is allowable in the attachment. That is, the side walls 11 and 12 may be narrowed only a little.

Although the invention has been described in its preferred form with a certain degree of particularity, it is understood that the present disclosure of the preferred form can be changed in the details of construction and in the combination and arrangement of parts without departing from the spirit and the scope of the invention as hereinafter claimed.

## Claims

1. A glass run comprising:
an extrusion portion formed by an extrusion-molding method; and
a molded portion formed by a die-molding method so as to be connected to an end portion of said extrusion portion;
wherein each of said extrusion portion and said molded portion having a body portion with a substantially U-shape in a cross section, said body portion including a bottom wall being attachable to a sash provided in a vehicle body or a vehicle door, and a pair of side walls extending from said bottom wall, and a pair of seal lips extending toward an inside of said body portion from said pair of side walls respectively for sealing a vehicle interior side and a vehicle exterior side with respect to a glass; and
wherein, when said body portion is not attached to said sash, said body portion corresponding to said molded portion has a substantially unexpanded U-shape in a cross section same as that when said body portion of said molded portion is attached to said sash.

2. A glass run according to claim 1, wherein said body portion corresponding to said extrusion portion is in an expanded state when said glass run is not attached to said sash.

3. A glass run according to claim 1, wherein a gap not larger than a thickness of said glass is formed between said pair of seal lips corresponding to said molded portion.

4. Aglass run according to claim 1, wherein saidmolded portion couples two extrusion portions at a predetermined nonlinear angle.

5. Aglass run according to claim 1, wherein said molded portion couples two extrusion portions having different sectional shapes from each other.

6. A glass run comprising:
an extrusion portion formed by an extrusion-molding method; and
a molded portion formed by an injection molding method so as to be connected to an end portion of said extrusion portion;
wherein each of said extrusion portion and said molded portion having a body portion with a substantially U-shape in a cross section, said body portion including a bottom wall being attachable to a sash provided in a vehicle body or a vehicle door, and a pair of side walls extending from said bottom wall, and a pair of seal lips extending toward an inside of said body portion from said pair of side walls respectively for sealing a vehicle interior side and a vehicle exterior side with respect to a glass; and
wherein a sectional shape of said body portion corresponding to said molded portion is not substantially changed before and after said glass run is attached to said sash.

7. A glass run according to claim 6, wherein said body portion corresponding to said extrusion portion is in an expanded state when said glass run is not attached to said sash.

8. A glass run according to claim 6, wherein a gap not larger than a thickness of said glass is formed between said pair of seal lips corresponding to said molded portion.

9. Aglass run according to claim 6, wherein saidmolded portion couples two extrusion portions at a predetermined nonlinear angle.

10. Aglass run according to claim 6, wherein said molded portion couples two extrusion portions having different sectional shapes from each other.

11. A method for manufacturing a glass run comprising a body portion including a bottom wall being attachable to a sash provided in a vehicle body or a vehicle door and a pair of side walls extending from said bottom wall, and a pair of seal lips extending toward an inside of said body portion from said pair of side walls respectively for sealing a vehicle interior side and a vehicle exterior side with respect to a glass; said method comprising steps of:
extrusion-molding an extrusion portion having said pair of side walls, where saidpair of side walls expanded with respect to said bottom wall has a substantially longitudinally equal sectional shape; and
injection-molding a molded portion by injecting a molding material into a cavity while setting an end portion of said extrusion portion in a mold, so that said molded portion is connected to said end portion of said extrusion portion;
wherein a portion of said cavity corresponding to said body portion has a substantially unexpanded U-shape in a cross section.

12. A method for manufacturing a glass run according to claim 11, wherein said mold has a core for defining inner circumferential surfaces of said body portion and said seal lips, and said extrusion portion is set in said mold by fitting said end portion of said extrusion portion into an end portion of said core, while retention means for retaining said core is extended from a portion of said mold corresponding to said extrusion portion.
